# FASCICULE DE BREVET EUROPEEN

(11) **EP 0 530 109 B1**
(45) Date de publication et mention de la délivrance du brevet: **29.01.1997**
(21) Numéro de dépôt: 92402360.9
(22) Date de dépôt: 28.08.1992
(51) Int. Cl.: H04B 10/16, H04B 10/20

(54) **Système de communication optique utilisant des amplificateurs optiques à semiconducteur à onde progressive**
Optisches Übertragungssystem mit optischen Wanderwellen-Halbleiterverstärkern
Optical communication system using semi-conductor traveling wave optical amplifiers

(30) Priorité: 30.08.1991 FR 9110773
(43) Date de publication de la demande: 03.03.1993
(73) Titulaire: FRANCE TELECOM, 75015 Paris (FR)
(72) Inventeur: Sorel, Yvon, F-22700 Louannec (FR); Simon, Jean-Claude, F-22700 Louannec (FR); Auffret, René, F-22700 Perros Guirec (FR)
(74) Mandataire: Dubois-Chabert, Guy

(56) Documents cités:
- EP-A- 0 414 333
- EP-A- 0 440 276
- DE-A- 3 732 626
- FR-A- 2 546 012
- US-A- 4 918 396

## Description

La présente invention concerne un système de communication optique.

Elle s'applique aux télécommunications optiques et en particulier à la réalisation de bus optiques.

On connaît déjà un réseau optique auquel le raccordement d'un interlocuteur nécessite non seulement un récepteur et un émetteur mais encore deux coupleurs optiques qui servent respectivement :
- à prélever des informations transmises par la ligne optique de ce réseau optique pour les amener au récepteur, et
- à injecter dans cette ligne optique des informations issues de l'émetteur.

Ce réseau optique connu présente un inconvénient : les pertes occasionnées par les coupleurs limitent le nombre d'interlocuteurs et, en conséquence, la taille du réseau.

On connaît également par les documents suivants :
(1) Cascaded carrier depletion optical switches based on InP/GaInAsP waveguides, J.A. Cavaillès et al., Comptes rendus de ECOC'90, p. 213 à 216,
(2) Single mode polarization insensitive GaInAsP/InP total internal reflection optical switch, M. Renaud et al., Comptes rendus de ECOC'90, p. 217 à 220,
(3) Synchronization of passive access nodes in very high speed optical packet networks, T.M. Martinson, Comptes rendus de ECOC'90, p. 473 à 476,
(4) InP monolithically integrated passive access node switches for very high speed optical loop, M. Erman et al., Comptes rendus de ECOC'90, p. 1015 à 1018,
des réseaux de communication le long desquels sont placés des noeuds d'accès passif ("passive access nodes" dans les publications en langue anglaise) comportant des commutateurs optiques.

Ces derniers présentent, entre autres, l'inconvénient d'extraire de ces réseaux de communication une puissance lumineuse assez importante lorsqu'ils sont utilisés en tant que détecteurs.

La présente invention a pour but de remédier aux inconvénients précédents.

Pour ce faire, l'invention utilise des amplificateurs optiques à semiconducteur à onde progressive ("traveling wave semiconductor optical amplifiers" dans les publications en langue anglaise), chacun de ces amplificateurs assurant alternativement
- une fonction de détection d'informations et
- une fonction d'émission d'informations par modulation d'un signal optique continu.

De façon précise, la présente invention a pour objet un système de communication optique, caractérisé en ce qu'il comprend :
- au moins une fibre optique et
- des stations d'émission-réception placées le long de cette fibre optique, chaque station comportant au moins un amplificateur optique à semiconducteur à onde progressive qui est monte sur la fibre optique,
en ce que le système comprend en outre des moyens d'émission prévus pour envoyer dans cette fibre optique au moins un signal optique continu qui traverse ainsi l'amplificateur de chaque station, et en ce que cet amplificateur est prévu pour, alternativement,
- moduler, à l'aide de moyens de modulation, le signal optique continu qui traverse cet amplificateur, afin d'émettre des informations à l'intention de l'un au moins des autres amplificateurs qui reçoivent le signal ainsi modulé, et
- détecter, à l'aide de moyens de détection, des informations sous forme d'au moins un signal module qui est destiné à cet amplificateur et qui a été émis par un autre amplificateur du système et transmis par la fibre optique.

Dans la présente invention, un seul composant remplit donc à la fois les fonctions d'émission et de réception.

Avec l'invention, le nombre de composants d'un bus optique est réduit de façon importante et l'on n'a plus les pertes qui étaient liées aux coupleurs optiques.

L'invention permet de réaliser un réseau optique de plus grande taille et plus grande dynamique que les réseaux optiques connus (à cause du gain des amplificateurs utilises dans l'invention).

Certes, il est connu par le document suivant
(5) Traveling wave semiconductor laser amplifier detectors, Mats Gustavsson et al., Journal of lightwave technology, vol. 8, n°4, avril 1990, p. 610 à 617,
d'utiliser un amplificateur optique à onde progressive, encore appelé amplificateur optique non résonant, en tant que détecteur, en particulier sur un bus de données à fibre optique.

Néanmoins, ce document (5) ne prévoit pas d'adapter l'amplificateur de façon qu'il fonctionne alternativement en tant que détecteur et en tant que modulateur.

Le document EP-A-0 414 333 décrit déjà un système n'utilisant qu'un seul type d'amplificateur pour détecter, moduler et générer un signal optique. Toutefois, dans ce système il peut arriver que les amplificateurs soient surchargés lorsque plusieurs stations transmettent simultanément.

Selon un mode de réalisation particulier du système objet de l'invention, l'un au moins des amplificateurs comporte une première électrode et une deuxième électrode qui sont respectivement reliées aux moyens de modulation et aux moyens de détection.

Selon un autre mode de réalisation particulier, l'un au moins des amplificateurs comporte une électrode qui est reliée, alternativement,
- aux moyens de modulation, et
- aux moyens de détection.

Les moyens d'émission peuvent comprendre un premier laser et un deuxième laser qui sont respectivement placés aux deux extrémités de la fibre optique, chacun de ces premier et deuxième lasers étant prévu pour envoyer dans cette fibre optique un signal optique continu.

De préférence, les longueurs d'onde d'émission respectives des premier et deuxième lasers sont différentes et chaque laser est muni d'un filtre qui l'empêche de recevoir la lumière issue de l'autre laser, pour ne pas perturber le fonctionnement des lasers.

Enfin, chaque station peut comprendre des premier et deuxième amplificateurs optiques à semiconducteur à onde progressive qui sont montés en parallèle sur la fibre optique, chacun des premier et deuxième amplificateurs étant,
- d'une part, prévu pour, alternativement, moduler le signal optique continu émis par l'un des lasers et détecter des informations résultant de la modulation de ce signal par au moins un autre amplificateur du système, et
- d'autre part, muni d'un filtre qui l'empêche de recevoir la lumière issue de l'autre laser.

La présente invention sera mieux comprise à la lecture de la description d'exemples de réalisation donnés ci-après à titre purement indicatif et nullement limitatif, en faisant référence aux dessins annexés sur lesquels :
- la figure 1 est une vue schématique d'un mode de réalisation particulier du système objet de l'invention,
- la figure 2 est une vue schématique d'un amplificateur optique à semiconducteur à onde progressive comportant deux électrodes de travail, qui est utilisable dans la présente invention,
- la figure 3 est une vue schématique d'un autre amplificateur optique à semiconducteur à onde progressive comportant une seule électrode de travail, qui est également utilisable dans la présente invention, et
- la figure 4 est une vue schématique et partielle d'un autre mode de réalisation particulier du système objet de l'invention.

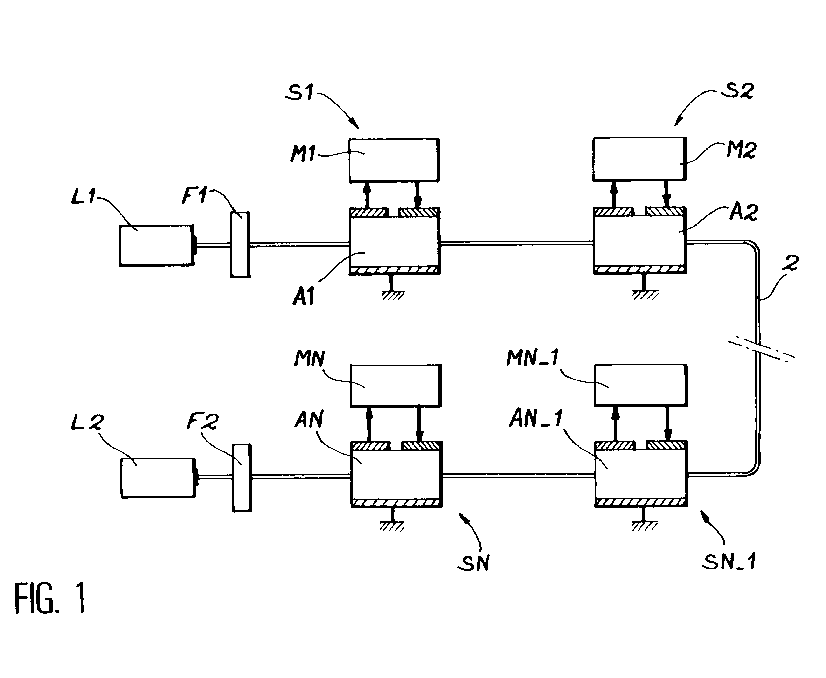

Sur la figure 1, on a représenté schématiquement un système conforme à l'invention.

Il s'agit d'un bus optique qui a une structure de boucle ouverte.

Ce bus optique comprend une ligne de transmission optique constituée par exemple par une fibre optique monomode 2.

Le long de cette fibre 2 sont placées N stations d'émission-réception S1, S2, ..., SN-1, SN, où N est un nombre entier au moins égal à 2.

Ces N stations S1, S2, ..., SN-1, SN comprennent respectivement N amplificateurs optiques à semiconducteur à onde progressive A1, A2, ..., AN-1, AN.

Ces amplificateurs optiques sont montés sur la fibre optique 2 : ils sont reliés les uns aux autres par des tronçons de cette fibre optique de sorte qu'ils sont successivement parcourus par une lumière qui est injectée à une extrémité de la fibre optique 2.

De plus, deux lasers L1 et L2 sont respectivement placés aux deux extrémités de la fibre optique 2.

Le laser L1 envoie dans cette fibre 2 (par l'intermédiaire d'une lentille non représentée) un signal optique continu de longueur d'onde l1.

De même, le laser L2 envoie dans la fibre 2 (par l'intermédiaire d'une autre lentille non représentée) un signal optique continu de longueur d'onde l2.

Ainsi, la fibre 2 est parcourue par des signaux optiques continus suivant deux sens de transmission opposés.

Les longueurs d'ondes l1 et l2 peuvent être égales mais, de préférence, elles sont différentes et l'on prévoit alors :
- entre le laser L1 et l'extrémité correspondante de la fibre 2, un filtre F1 qui élimine la lumière de longueur d'onde l2 qui se propage dans la fibre en direction du laser L1, et
- entre le laser L2 et l'extrémité correspondante de la fibre 2, un filtre F2 qui élimine la lumière de longueur d'onde l1 qui se propage dans la fibre en direction du laser L2.

De cette façon, on évite de perturber le fonctionnement des lasers L1 et L2.

On a ainsi une structure dans laquelle deux longueurs d'ondes sont respectivement affectées aux deux sens de parcours opposés dans la fibre 2.

Une telle structure est possible car la bande passante optique des amplificateurs à onde progressive est très grande - elle est supérieure ou égale à 6000 GHz (ce qui correspond à plus de 50 nm à 1,5 micromètre).

Le filtrage optique de deux longueurs d'ondes espacées de plusieurs dizaines de nanomètre ne pose pas de problème particulier.

Chaque amplificateur optique a "une symétrie de fonctionnement" en ce sens qu'il fonctionne à l'identique quel que soit le sens de parcours de la lumière.

Les deux sens de transmission autorisés par cette symétrie de fonctionnement permettent à chaque interlocuteur (c'est-à-dire l'utilisateur d'une station d'émission-réception) de communiquer avec ceux qui se trouvent de part et d'autre de sa station sur la ligne optique.

En revenant à la figure 1, on voit que les amplificateurs optiques A1, A2, ..., AN-1, AN sont respectivement associés à des moyens d'émission-réception M1, M2, ..., MN-1, MN qui seront décrits par la suite.

Dans l'exemple représenté sur la figure 1, les amplificateurs optiques sont des amplificateurs à deux électrodes de travail.

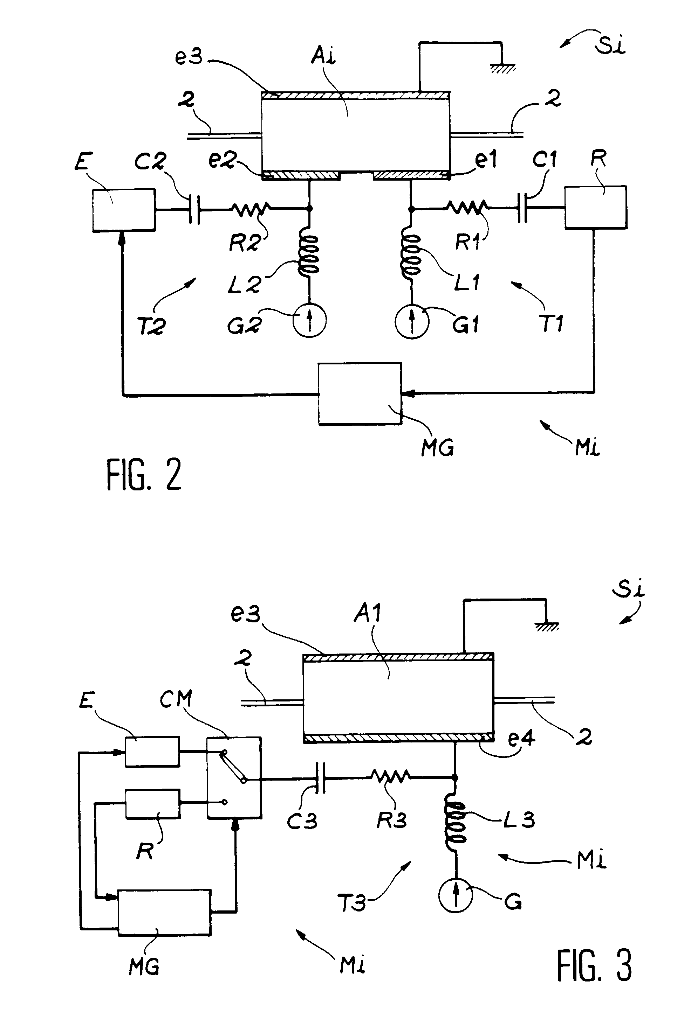

On voit sur la figure 2 l'un de ces amplificateurs qui porte la référence Ai (1≦i≦N) et qui est inséré dans la ligne optique 2.

L'amplificateur Ai (i prenant l'une quelconque des valeurs 1 à N) comporte, sur une face, une première électrode e1 et une deuxième électrode e2 qui sont placées côte à côte et, sur la face opposée, une électrode e3 mise à la masse.

L'amplificateur Ai est muni de ses moyens d'émission-réception Mi.

Ces derniers comprennent un premier Té de polarisation, qui porte la référence T1, un deuxième Té de polarisation, qui porte la référence T2, un émetteur E, un récepteur R et des moyens électroniques de gestion MG.

Le premier Té comprend une résistance de charge R1 (de 50 ohms par exemple) et une inductance de blocage L1 qui ont une borne commune, cette dernière étant reliée à la première électrode e1.

Ce premier Té comprend aussi un condensateur de découplage C1 par l'intermédiaire duquel la résistance R1 est reliée à l'entrée du récepteur R associé à l'amplificateur optique Ai.

L'autre borne de l'inductance L1 est reliée à un premier générateur de courant G1 qui fournit un courant de polarisation I1.

Le deuxième Té comprend une résistance de charge R2 (de 50 ohms par exemple) et une inductance de blocage L2 qui ont une borne commune, cette dernière étant reliée à la deuxième électrode e2.

Le deuxième Té comprend aussi un condensateur de découplage C2 par l'intermédiaire duquel la résistance R2 est reliée à la sortie de l'émetteur E associé à l'amplificateur optique Ai.

L'autre borne de l'inductance L2 est reliée à un deuxième générateur de courant G2 qui fournit un courant de polarisation I2.

Les courants de polarisation I1 et I2 sont appliqués en permanence.

En ce qui concerne la détection, l'amplificateur à onde progressive Ai, lorsqu'il est traversé par un signal optique modulé en amplitude, fournit entre les électrodes e1 et e3, une tension électrique dont la variation est liée à celle du nombre de photons qui traversent l'amplificateur Ai.

La bande passante de cet amplificateur fonctionnant en détecteur est d'environ 200 MHz à 3 dB (voir le document (5)).

C'est le récepteur R qui détecte et amplifie cette tension et traduit celle-ci en informations à l'intention de l'utilisateur de la station où se trouve l'amplificateur Ai.

En ce qui concerne l'émission, lorsque l'amplificateur Ai est traversé par un signal optique continu, si on module le courant d'injection de cet amplificateur Ai et donc le gain de cet amplificateur, ce dernier se comporte alors comme un modulateur d'amplitude dont la bande passante à 3 dB vaut environ 200 MHz, comme pour la détection.

C'est l'émetteur E qui fournit un signal électrique modulé traduisant les informations que l'utilisateur de la station correspondante veut envoyer à une ou d'autres stations.

On a donc bien la possibilité, avec un amplificateur optique à onde progressive à deux électrodes, d'avoir alternativement une fonction d'émission et une fonction de réception, chacune des électrodes e1 et e2 étant affectée à l'une de ces deux fonctions.

On explique ci-après le fonctionnement du bus optique représenté sur la figure 1.

Etant donné les N interlocuteurs en ligne, l'un de ces interlocuteurs émet des informations et les N-1 autres interlocuteurs reçoivent les informations émises.

Pour la réception, tous les amplificateurs A1,..., AN détectent en permanence les signaux de longueurs d'ondes l1 et l2 transportés par la fibre 2.

La prise d'information est réalisée par la station adressée lorsque ses circuits électroniques reconnaissent l'adresse qui précède tout signal d'information, comme c'est le cas pour les protocoles de gestion des bus optiques classiques.

Pour l'émission, lorsqu'une station Si (1≤i≤N) émet, son amplificateur Ai module en amplitude les signaux optiques continus (de longueurs d'ondes l1 et l2) qui le traversent.

Cette modulation résulte d'un signal électrique qui porte les informations à émettre et qui est issue de l'émetteur E de la station Si.

Les moyens électroniques de gestion MG sont reliés à l'émetteur E et au récepteur R.

Ces moyens de gestion MG autorisent l'émission par la station considérée lorsqu'une autre station a fini d'émettre.

En outre, ces moyens de gestion MG engendrent les informations autorisant l'émission par l'une quelconque des autres stations lorsque la station considérée a fini d'émettre.

Dans un autre mode de réalisation particulier qui est schématiquement illustré par la figure 3, tous les amplificateurs A1, A2, ... AN ou certains d'entre eux comportent non plus deux électrodes de travail e1 et e2 mais une seule électrode de travail e4.

Dans ce cas, il n'y a qu'un seul Té de polarisation référencé T3 sur la figure 3.

Ce Té comprend une résistance de charge R3 (qui vaut par exemple 50 ohms) et une inductance de blocage L3 qui ont une borne commune reliée à l'électrode e4.

L'autre électrode e3 de l'amplificateur Ai est comme précédemment à la masse.

L'autre borne de l'inductance L3 est reliée à un générateur de courant G qui fournit un courant de polarisation I3.

L'autre borne de la résistance R3 est reliée à une borne d'un condensateur de découplage C3 dont l'autre borne est reliée
- soit à la sortie de l'émetteur E de la station considérée Si,
- soit à l'entrée du récepteur R de cette station,
grâce à un commutateur CM à deux positions dont l'état (position) est commandé par les moyens de gestion MG que comportent les moyens d'émission-réception Mi de la station.

Dans ce cas, lorsque cette station a fini d'émettre, le commutateur passe en position de réception (le condensateur C3 étant alors relié au récepteur R) et lorsque la station ne reçoit aucune information qui lui est destinée et que cette station souhaite émettre, le commutateur CM passe en position d'émission (le condensateur C3 étant alors relié à l'émetteur E).

Dans le protocole de gestion, on tient compte du temps de propagation des signaux sur la ligne 2 pour éviter que des informations de longueurs d'ondes respectives l1 et l2 arrivent simultanément sur un amplificateur optique.

Pour simplifier le protocole de gestion, on peut réaliser un bus optique conforme à l'invention (non représenté) comportant deux fibres optiques parallèles.

Le laser L1 est alors placé d'un côté de l'ensemble des deux fibres et le laser L2 est placé de l'autre côté de cet ensemble.

Le laser L1 envoie le signal optique continu qui lui correspond dans l'une des deux fibres et le laser L2 envoie le signal optique continu qui lui correspond dans l'autre fibre.

Alors, chaque station d'émission-réception comprend deux amplificateurs optiques à onde progressive qui sont respectivement montés sur les deux fibres, chacun de ces deux amplificateurs étant bien entendu munis de moyens d'émission-réception.

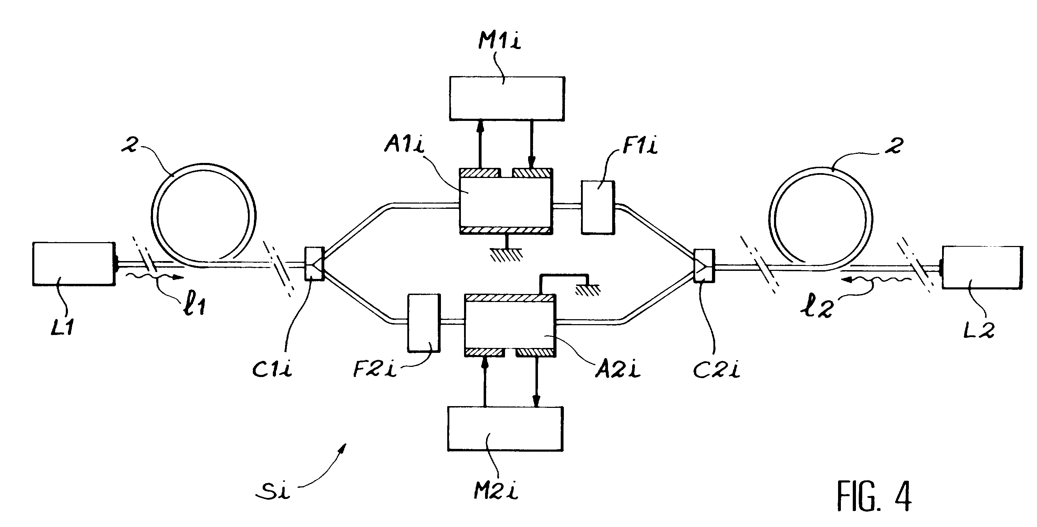

Un autre mode de réalisation particulier de la présente invention, qui est schématiquement et partiellement représenté sur la figure 4, permet d'éviter le doublement des équipements qui vient d'être envisagé.

Dans ce mode de réalisation particulier qui est représenté sur la figure 4, les lasers L1 et L2 sont placés aux deux extrémités de la ligne 2 et celle-ci est parcourue dans des sens opposés, comme dans le cas de la figure 1, par les signaux optiques continus de longueurs d'ondes respectives l1 et l2.

Chaque station Si (1≤i≤N) comprend alors deux amplificateurs optiques à semiconducteur à onde progressive A1i et A2i montés en parallèle sur la fibre 2.

La station Si comprend aussi :
- un premier filtre optique passe-bande F1i qui empêche l'arrivée des signaux optiques de longueur d'onde l2 dans l'amplificateur A1i et
- un deuxième filtre optique passe-bande F2i qui empêche l'arrivée des signaux optiques de longueur d'onde l1 dans l'amplificateur A2i.

Pour installer la station Si sur la fibre 2, on utilise un premier coupleur en Y référencé C1i, dont une branche est raccordée au tronçon de fibre 2 par où arrivent les signaux de longueur d'onde l1.

Les deux autres branches de ce coupleur C1i sont respectivement reliées :
- à un côté de l'amplificateur A1i,
- à un côté de l'ampliicateur A2i, par l'intermédiaire du filtre F2i.

On utilise aussi un deuxième coupleur en Y référencé C2i, dont une branche est raccordée au tronçon de fibre 2 par où arrivent les signaux de longueur d'onde l2.

Les deux autres branches de ce coupleur C2i sont respectivement reliées :
- à l'autre côté de l'amplificateur A1i par l'intermédiaire du filtre F1i,
- à l'autre côté de l'amplificateur A2i.

L'amplificateur A1i de la station Si permet :
- de recevoir des informations de toute station comprise entre cette station Si et le laser L1, et
- d'émettre des informations en direction de toute station comprise entre cette station Si et le laser L2.

L'amplificateur A2i de la station Si permet :
- d'émettre des informations en direction de toute station comprise entre cette station Si et le laser L1, et
- de recevoir des informations de toute station comprise entre cette station Si et le laser L2.

Les amplificateur A1i et A2i sont bien entendu respectivement associés à des moyens d'émission-réception M1i et M2i.

Dans un autre mode de réalisation particulier non représenté, le bus optique a une structure de boucle fermée et les stations d'émission-réception comportent chacune un seul amplificateur optique à semi-conducteur à onde progressive et sont réparties le long de la ligne optique de ce bus.

Dans ce cas, un seul laser est prévu pour injecter de la lumière dans cette ligne optique.

## Revendications

1. Système de communication optique comprenant
- au moins une fibre optique (2) et
- des stations d'émission-réception (S1, S2, ..., Si, ..., SN) placées le long de cette fibre optique (2), caractérisé en ce que chaque station comporte au moins un amplificateur optique à semiconducteur à onde progressive (A1, A2, ..., Ai, ..., AN ; A1i, A2i) qui est monté sur la fibre optique (2),
en ce que le système comprend en outre des moyens d'émission (L1, L2) prévus pour envoyer dans cette fibre optique au moins un signal optique continu qui traverse ainsi l'amplificateur de chaque station, et en ce que cet amplificateur (A1, A2, ..., Ai, ..., AN ; A1i ; A2i) est prévu pour, alternativement,
- moduler, à l'aide de moyens de modulation (E, T2 ; E, T3) le signal optique continu qui traverse cet amplificateur, afin d'émettre des informations à l'intention de l'un au moins des autres amplificateurs qui reçoivent le signal ainsi modulé, et
- détecter, à l'aide de moyens de détection (R, T1 ; R, T3) des informations sous forme d'au moins un signal modulé qui est destiné à cet amplificateur et qui a été émis par un autre amplificateur du système et transmis par la fibre optique (2).

2. Système selon la revendication 1, caractérisé en ce que l'un au moins des amplificateurs (A1, A2, ... Ai, ..., AN ; A1i, A2i) comporte une première électrode (e1) et une deuxième électrode (e2) qui sont respectivement reliées aux moyens de détection (R, T1) et aux moyens de modulation (E, T2).

3. Système selon la revendication 1, caractérisé en ce que l'un au moins des amplificateurs (A1, A2, ..., Ai, ..., AN ; A1i, A2i) comporte une électrode (e4) qui est reliée, alternativement,
- aux moyens de modulation (E, T3), et
- aux moyens de détection (R, T3).

4. Système selon l'une quelconque des revendications 1 à 3, caractérisé en ce que les moyens d'émission comprennent un premier laser (L1) et un deuxième laser (L2) qui sont respectivement placés aux deux extrémités de la fibre optique (2), chacun de ces premier et deuxième lasers étant prévu pour envoyer dans cette fibre optique un signal optique continu.

5. Système selon la revendication 4, caractérisé en ce que les longueurs d'onde d'émission respectives des premier (L1) et deuxième (L2) lasers sont différentes et en ce que chaque laser est muni d'un filtre (F1, F2) qui l'empêche de recevoir la lumière issue de l'autre laser.

6. Système selon la revendication 5, caractérisé en ce que chaque station comprend des premier et deuxième amplificateurs optiques à semiconducteur à onde progressive (A1i, A2i) qui sont montés en parallèle sur la fibre optique (2), chacun des premier et deuxième amplificateurs étant,
- d'une part, prévu pour, alternativement, moduler le signal optique continu émis par l'un des lasers et détecter des informations résultant de la modulation de ce signal par au moins un autre amplificateur du système, et
- d'autre part, muni d'un filtre (F1i, F2i) qui l'empêche de recevoir la lumière issue de l'autre laser.

## Patentansprüche

1. Optisches Übertragungssystem, umfassend:
- wenigstens eine optische Faser (2) und
- entlang dieser optischen Faser (2) angeordnete Sende/Empfangsstationen (S1, S2, ..., Si, ..., SN),
**dadurch gekennzeichent, daß**
- jede Station wenigstens einen optischen Wanderwellen-Halbleiterverstärker (A1, A2, ..., Ai, ..., AN; A1i, A2i) aufweist, der auf der optischen Faser (2) angebracht ist,
- das System weiterhin Sendeinrichtungen (L1, L2) aufweist, die vorgesehen sind, um in dieser optischen Faser wenigstens ein kontinuierliches optisches Signal zu senden, welches auf diese Weise den Verstärker jeder Station durchläuft, und
- daß dieser Verstärker (A1, A2, ..., Ai, ..., AN; A1i, A2i) vorgesehen ist, um wechselweise
- das kontinuierliche optische Signal, das diesen Verstärker durchläuft, mit Hilfe der Modulationseinrichtung (E, T2; E, T3) zu modulieren, um Daten zu wenigstens einem der anderen Verstärken zu senden, die das so modulierte Signal empfangen und
- mit Hilfe der Detektoreinrichtung (R, T1; R, T2) Daten in Form wenigstens eines modulierten Signals zu erfassen, welches für diesen Verstärker bestimmt ist und von einem anderen Verstärker des Systems ausgesendet und von der optischen Faser (2) übertragen wurde.

2. System nach Anspruch 1, **dadurch gekennzeichent, daß** wenigstens einer der Verstärker (A1, A2, ..., Ai, ... AN; A1i, A2i) eine erste Elektrode (e1) und eine zweite Elektrode (e2) aufweist, welche jeweils mit Detektoreinrichtungen (R, T1) und Modulationseinrichtungen (E, T2) verbunden sind.

3. System nach Anspruch 1, **dadurch gekennzeichnet, daß** wenigstens einer der Verstärker (A1, A2, ..., Ai, ..., AN; A1i, A2i) eine Elektrode (e4) aufweist, die alternativ mit
- den Modulationseinrichtungen (E, T3) und
- den Detektoreinrichtungen (R, T3) verbunden ist.

4. System nach einem der Ansprüche 1 bis 3, **dadurch gekennzeichnet, daß** die Sendeeinrichtungen einen ersten Laser (L1) und einen zweiten Laser (L2), die jeweils an den beiden Enden der optischen Faser (2) angeordnet sind, aufweisen, wobei jeder dieser ersten und zweiten Laser vorgesehen ist, um in dieser optischen Faser ein kontinuierliches optisches Signal zu senden.

5. System nach Anspruch 4, **dadurch gekennzeichnet, daß** die Sende-Wellenlängen des ersten (L1) bzw. zweiten (L2) Lasers unterschiedlich sind und daß jeder Laser mit einem Filter (F1, F2) versehen ist, der den Empfang von von dem anderen Laser abgegebenem Licht verhindert.

6. System nach Anspruch 5, **dadurch gekennzeichnet, daß** jede Station einen ersten und einen zweiten optischen Wanderwellen-Halbleiterverstärker (A1i, A2i) aufweist, die parallel auf der optischen Faser (2) angeordnet sind, wobei jeder der ersten und zweiten Verstärker
- einerseits vorgesehen ist, um alternativ das von einem der Laser ausgesendete kontinuierliche optische Signal zu modulieren und die sich aus der Modulation dieses Signals durch wenigstens einen anderen Verstärker des Systems ergebenden Daten zu erfassen und
- andererseits mit einem Filter (F1i, F2i) versehen ist, der den Empfang von von dem anderen Laser abgegebenem Licht verhindert.

## Claims

1. Optical communication system, comprising:
- at least one optical fibre (2) and
- transmission-reception stations (S1, S2, ..., Si, ..., SN) placed along said optical fibre (2), characterized in that each station has at least one travelling wave semiconductor optical amplifier (A1, A2, ..., Ai, ..., AN; A1i, A2i) installed on the optical fibre (2),
- in that the system also comprises transmission means (L1, L2) for feeding into said optical fibre at least one continuous optical signal, which thus traverses the amplifier of each station and in that said amplifier (A1, A2, ..., Ai, ..., AN; A1i; A2i) is provided in order to alternately,
- modulate, with the aid of modulating means (E, T2; E, T3) the continuous optical fibre traversing said amplifier, in order to transmit information intended for at least one of the other amplifiers which receive the thus modulated signal and
- detecting, with the aid of detecting means (R, T1; R, T3) information in the form of at least one modulated signal intended for said amplifier and which is transmitted by another amplifier of the system and transmitted by the optical fibre (2).

2. System according to claim 1, characterized in that at least one of the amplifiers (A1, A2, ..., Ai, ..., AN; A1i, A2i) has a first electrode (e1) and a second electrode (e2), which are respectively connected to the detecting means (R, T1) and to the modulating means (E, T2).

3. System according to claim 1, characterized in that at least one of the amplifiers (A1, A2, ..., Ai, ..., AN; A1i, A2i) has an electrode (e4), which is alternately connected to the modulating means (E, T3) and the detection means (R, T3).

4. System according to any one of the claims 1 to 3, characterized in that the transmission means comprise a first laser (L1) and a second laser (L2), which are respectively placed at the two ends of the optical fibre (2), each of said first and second lasers feeding into said optical fibre a continuous optical signal.

5. System according to claim 4, characterized in that the respective transmission wavelength of the first (L1) and second (L2) lasers are different and in that each laser is provided with a filter (F1, F2) preventing it from receiving the light from the other laser.

6. System according to claim 5, characterized in that each station comprises first and second travelling wave semiconductor optical amplifiers (A1i, A2i), which are connected in parallel on the optical fibre (2), each of the first and second amplifiers being on the one hand provided for alternately modulating the continuous optical signal transmitted by one of the lasers and for detecting the information resulting from the modulation of this signal by at least one other amplifier of the system and on the other hand is provided with a filter (F1i, F2i) preventing it from receiving the light from the other laser.
